# EUROPÄISCHE PATENTSCHRIFT

(11) **EP 3 330 220 B1**
(45) Veröffentlichungstag und Bekanntmachung des Hinweises auf die Patenterteilung: **07.08.2019**
(21) Anmeldenummer: 16400055.6
(22) Anmeldetag: 05.12.2016
(51) Int. Cl.: C01B 3/38, C10G 45/00

(54) **VERFAHREN ZUM HERSTELLEN EINES FEEDSTROMS FÜR EINE DAMPFREFORMIERUNGSANLAGE**
METHOD OF MANUFACTURING A FEED FLOW FOR A STEAM REFORMING INSTALLATION
PROCÉDÉ DE FABRICATION D'UN COURANT D'ALIMENTATION POUR UNE INSTALLATION DE VAPOREFORMAGE

(43) Veröffentlichungstag der Anmeldung: 06.06.2018
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Swatantra, Kumar Shrivastava, 35423 Lich (DE); Mrityunjoy, Samaddar, 60438 Frankfurt am Main (DE)
(74) Vertreter: Dropsch, Holger

(56) Entgegenhaltungen:
- WO-A2-2011/016970
- US-A- 3 477 832
- US-A1- 2008 237 090
- US-B1- 7 037 485
- US-B2- 8 080 070

## Beschreibung

### Gebiet der Erfindung

Die vorliegende Erfindung betrifft ein Verfahren zum Herstellen eines Feedstroms für eine Dampfreformierungsanlage, wobei ein Kohlenwasserstoff-Einsatzstrom verwendet wird, der Olefine enthält.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann.

Die Dampfreformierung von Erdgas verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Reformerrohre werden zumeist mittels Brennern befeuert, die an der Oberseite oder Unterseite oder an den Seitenwänden im Innenraum des Reformerofens angebracht sind und direkt den Zwischenraum zwischen den Reformerrohren befeuern.

Nach Vorerhitzung durch Wärmetauscher oder befeuerte Heizer tritt das Kohlenwasser-stoff-Dampf-Gemisch nach Enderhitzung in die Reformerrohre ein und wird dort am Re-formierungskatalysator zu Kohlenmonoxid und Wasserstoff umgesetzt. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf.

Zur Energieoptimierung und/oder bei Einsatzstoffen mit höheren Kohlenwasserstoffen kann nach dem Vorerhitzer ein sogenannter Prereformer (Vorreformer) zur Vorspaltung des Einsatzstoffes eingesetzt werden. Der vorgespaltene Einsatzstoff wird dann in einem weiteren Erhitzer auf die gewünschte Eintrittstemperatur in den Hauptreformer, beispielsweise den Steamreformer, erhitzt. Die konventionelle Vorreformierung kann als Dampfreformierungsprozess bei begrenzten Temperaturen definiert werden (deutlich unter 700 °C). Sie führt zu einem gasförmigen Zwischenprodukt, dessen Hauptbestandteile Methan und Dampf sind. Das Zwischenprodukt enthält keine oder nur noch geringfügige Anteile höherer Kohlenwasserstoffe. Normalerweise wird dieses Zwischenprodukt in einem als Hauptreformer bezeichneten Steamreformer weiterbehandelt.

Wie in Ullmann's Encyclopedia of Industrial Chemistry, ibid., ausgeführt wird, werden für die Dampfreformierung normalerweise Katalysatoren auf mit Nickelbasis eingesetzt. Diese sind empfindlich gegenüber Katalysatorgiften wie Schwefel, Arsen, Kupfer, Vanadium, Blei und Chlor oder Halogene im Allgemeinen. Insbesondere Schwefel erniedrigt die Katalysatoraktivität deutlich und kann in praktisch allen Einsatzstoffen gefunden werden, die als Feed für die Dampfreformierung in Frage kommen. Daher müssen dem Feedstrom vor dem Einleiten in die Dampfreformierungsanlage diese Bestandteile durch geeignete Maßnahmen entzogen werden. Es werden heute Entschwefelungssysteme bevorzugt, bei denen die Entfernung von Schwefelverbindungen an Zinkoxid als Sorptionsmittel bei Temperaturen von 350 bis 400 ° C erfolgt. Diese Zinkoxid-basierten Entschwefelungssysteme sind sehr zuverlässig bei der Absorption von Schwefelwasserstoff und, mit Einschränkungen, Schwefelverbindungen wie Carbonylsulfid und Mercaptanen. Letztere werden oft mit Wasserstoff an geeigneten Katalysatoren zu Schwefelwasserstoff hydriert (Hydrodesuifurierung, HDS).

Für die Dampfreformierung ist zwar die Verwendung von methanhaltigem Erdgas als Einsatzstoff oder sog. Feed dominierend; es werden, je nach lokaler Verfügbarkeit, aber auch andere Kohlenwasserstoffe, wie beispielweise Naphtha, Flüssiggas oder Raffineriegase eingesetzt. So beschreibt die US-Patentschrift US 3477832 ein Verfahren zur Herstellung eines Synthesegases durch katalytische Dampfreformierung von Naphtha und ähnlichen Kohlenwasserstoffen. Als Naphtha im Sinne dieser Anmeldung werden dabei Kohlenwasserstoffe mit einer mittleren Kohlenstoffzahl von sieben verstanden, die gerade und verzweigte Kohlenwasserstoffe, einen gewissen Anteil aromatischer und olefinischer Kohlenwasserstoffe und verschiedene Verunreinigungen, beispielsweise Schwefelkomponenten, enthalten. Um dieses bei Umgebungsbedingungen flüssige Stoffgemisch in einen Feedstrom für die Dampfreformierung zu überführen, wird es verdampft und aufgeheizt, wobei die Temperatur idealerweise zwischen 260 und 316 °C liegen solite, aber keinesfalls 343°C überschreiten darf, da es ansonsten zu einem Zerfall von im Feed enthaltenen Komponenten unter Bildung unerwünschter Kohlenstoffablagerungen in der Dampfreformierungsanlage und in ihr vorgeschalteten Anlagenkomponenten kommt. Nachfolgend wird das aufgeheizte und verdampfte Stoffgemisch an einer Festbettschüttung einer Hydrierungskatalysators auf Co-Mo-Basis hydriert, wobei die Hydrierung ggf. mehrstufig verläuft. Anschließend wird das verdampfte und hydrierte Naphtha dem Dampfreformierungsreaktor zugeleitet.

Schwierigkeiten bereitet dabei die hohe Exothermie der Hydrierungsreaktion, die zur Bildung von Zonen hoher Temperatur im Katalysatorbett, sog. "hot Spots", führen kann. Letztere können ihrerseits zu unerwünschten Crackreaktionen ungesättigter Komponenten im Einsatzstoff und/oder vorzeitiger Katalysatordesaktivierung führen. Um die Temperaturführung im Hydrierungsreaktor sicher zu beherrschen, wird oft ein Teil des Hydrierungsreaktorproduktes zum Reaktoreingang zurückgeführt, um die im Einsatzstoff vorhandenen ungesättigten Verbindungen zu verdünnen. Nachteilig ist es dabei, dass zur Erzielung des gewünschten Verdünnungseffektes oft große Mengen des gasförmigen bzw. dampfförmigen Hydrierungsreaktorproduktes verdichtet und zum Reaktoreingang des Hydrierungsreaktors zurückgeführt werden müssen, was durch entsprechend große und somit teure Verdichter erreicht wird. Insbesondere bei mittleren bis hohen Olefingehalten, beispielsweise im Bereich von 10 bis 50 mol-%, sowie bei Olefingehalten, die in einem weiten Bereich variieren, ist es schwierig, Zonen hoher Temperatur im Katalysatorbett wirksam zu vermeiden.

US8080070 offenbart ein Verfahren zur Hydrogenierung von Olefinen. Nach dieser Hydrogenierung wird der Feedstrom im Reformer geführt. Es wird offenbart, dass Einsatzströme mit hohen Olefin-Konzentrationen ein Rückführen eines (dampfförmigen) Teilstroms zum Hydrierungsreaktor erfordern.

### Beschreibung der Erfindung

Es ist daher die Aufgabe der vorliegenden Erfindung, ein Verfahren zum Herstellen eines Feedstroms für eine Dampfreformierungsanlage aus einem olefinhaltigen Einsatzstoff anzugeben, das ohne die beschriebenen Nachteile des Standes der Technik auskommt. Insbesondere soll das Verfahren bzw. die Vorrichtung eine sichere Verdampfung des flüssigen Kohlenwasserstoffeinsatzes und die nachfolgende Hydrierung der darin enthaltenen, ungesättigten Verbindungen gewährleisten, wobei eine Überhitzung, die zur Crackreaktionen der enthaltenen Olefine führt, zu vermeiden ist.

Diese Aufgabe wird durch ein Verfahren mit den Merkmalen des Anspruchs 1 gelöst. Weitere Ausgestaltungen des erfindungsgemäßen Verfahrens ergeben sich aus den Unteransprüchen.

### Erfindungsgemäßes Verfahren:

Verfahren zum Herstellen eines Feedstroms für eine mindestens eine Reformierungsstufe enthaltende Dampfreformierungsanlage, umfassend folgende Schritte:
(a) Bereitstellen eines ersten flüssigen Einsatzstroms, der Olefine enthält, und eines zweiten, Wasserstoff umfassenden Einsatzstroms,
(b) Zusammenführen des ersten und des zweiten Einsatzstroms zu einem Hydrierungseinsatzstrom,
(c) Aufheizen des Hydrierungseinsatzstroms in einer Aufheizvorrichtung und Verdampfen des Hydrierungseinsatzstroms in einer Verdampfungsvorrichtung,
(d) Zuführen des aufgeheizten und verdampften Hydrierungseinsatzstroms zu einem mindestens eine Hydrierungszone umfassenden Hydrierungsreaktor, mindestens teilweises Umsetzen der im Hydrierungseinsatzstrom enthaltenen Olefine in dem Hydrierungsreaktor unter Olefin-Hydrierungsbedingungen, Ausleiten eines dampfförmigen Olefin-Hydrierungsproduktstroms aus dem Hydrierungsreaktor,
(e) Auftrennen des Olefin-Hydrierungsproduktstroms in einer Auftrennvorrichtung in einen dampfförmigen Reformierungsfeedstrom, der einer Dampfreformierungsanlage zugeführt wird, und in einen dampfförmigen Rückführstrom,
(f) Abkühlen des dampfförmigen Rückführstroms, wobei dieser mindestens teilweise kondensiert und nachfolgend einer Phasentrennvorrichtung zugeführt wird, in der er in einen dampfförmigen Teilrückführstrom und einen flüssigen Teilrückführstrom aufgetrennt wird,
(g) Ausleiten des dampfförmigen Teilrückführstroms und des flüssigen Teilrückführstroms aus der Phasentrennvorrichtung, wobei der dampfförmige Teilrückführstrom mit dem zweiten Einsatzstrom zusammengeführt wird und der flüssige Teilrückführstrom mit dem ersten Einsatzstrom zusammengeführt wird und/oder zum Verfahrensschritt (b) zurückgeführt wird,
wobei die Eintrittstemperatur des Hydrierungseinsatzstroms in den Hydrierungsreaktor mittels der Aufheizvorrichtung (Verfahrensschritt (c)) und/oder mittels der Auftrennvorrichtung (Verfahrensschritt (e)) geregelt wird.

Als höhere Kohlenwasserstoffe werden im Sinne der Erfindung alle Kohlenwasserstoffe mit mehr als einem C-Atom im Molekül verstanden.

Unter dem Gesamtolefingehalt wird die Summe der Gehalte an Mono- und Diolefinen verstanden.

Die für das Umsetzen der Olefine im Hydrierungsreaktor erforderlichen Umsetzungsbedingungen, die Olefin-Hydrierungsbedingungen, sind dem Fachmann aus dem Stand der Technik, beispielsweise den eingangs erörterten Druckschriften, bekannt. Notwendige Anpassungen dieser Bedingungen an die jeweiligen Betriebserfordernisse wird er auf der Grundlage von Routineversuchen vornehmen.

Der Erfindung liegt die Erkenntnis zugrunde, dass es vorteilhaft ist, einen Teil des Hydrierungsreaktorproduktes nicht gasförmig bzw. dampfförmig zum Eingang des Hydrierungsreaktors zurückzuführen, um die erwünschte Verdünnungswirkung zu erzielen. Vielmehr wird vorgeschlagen, den von dem dampfförmigen Reformierungsfeedstrom in der Auftrennvorrichtung abgetrennten Anteil des Olefin-Hydrierungsproduktstroms abzukühlen und mindestens teilweise zu kondensieren. Der dabei erhaltene flüssige Teilrückführstrom kann mittels einfacher Flüssigkeitspumpen gefördert und beispielsweise mit dem ersten, flüssigen Einsatzstrom zusammengeführt werden. Der dabei erhaltene dampfförmigen Teilrückführstrom kann aufgrund seiner geringen Größe entweder mit einem separaten Verdichter kleiner Baugröße gefördert und verdichtet werden, gegebenenfalls kann aber auch der für die Verdichtung des zweiten, wasserstoffhaltigen Einsatzstroms ohnehin benötigte Verdichter für das Fördern und Verdichten des dampfförmigen Teilrückführstroms mit genutzt werden. Auf diese Weise wird ein großer und kostspieliger Verdichter für den rückgeführten Anteil des Hydrierungsreaktorproduktes eingespart.

Vorteilhaft ist es ferner, dass die bei der mindestens teilweisen Kondensation des abgetrennten Anteils des Olefin-Hydrierungsproduktstroms freiwerdende Kondensationswärme durch indirekten Wärmetausch beispielsweise auf den ersten, flüssigen Einsatzstrom übertragen werden kann und so zu dessen Erwärmung vor der Verdampfung beiträgt. Hierdurch erhöht sich die Energieeffizienz des Verfahrens.

Ein weiterer Aspekt der Erfindung besteht darin, dass die Eintrittstemperatur des Hydrierungseinsatzstroms in den Hydrierungsreaktor über den Grad seiner Aufheizung und/oder über die Größe des Rückführstroms geregelt wird. Auf diese Weise wird ein sicherer Betrieb des Hydrierungsreaktors in einem weiten Bereich an Olefingehalten im Kohlenwasserstoffeinsatz ermöglicht. Bei niedrigen Gesamtolefingehalten wird es bevorzugt, die Eintrittstemperatur des Hydrierungseinsatzstroms in den Hydrierungsreaktor über den Grad seiner Aufheizung zu regeln. Dies kann durch entsprechendes Einstellen der verwendeten Aufheizvorrichtung erfolgen. Eine Überhitzung des Hydrierungsreaktors kann somit wirkungsvoll vermieden werden. Eingriffe in die Auftrennung und Rückführung des Olefin-Hydrierungsproduktstroms sind dann nicht erforderlich.

Bei höheren Gesamtolefingehalten kann es günstiger sein, die Eintrittstemperatur des Hydrierungseinsatzstroms in den Hydrierungsreaktor über die Größe des Rückführstroms zu regeln. Dabei wird die Eintrittstemperatur in den Hydrierungsreaktor durch feste Einstellung der Aufheizvorrichtung auf einem konstanten Minimalwert belassen.

Bei in einem weiten Bereich variierenden Gesamtolefingehatten ist es bevorzugt, die Eintrittstemperatur des Hydrierungseinsatzstroms in den Hydrierungsreaktor sowohl über den Grad seiner Aufheizung als auch über die Größe des Rückführstroms zu regeln. Diese Art der Regelung der Eintrittstemperatur des Hydrierungseinsatzstroms in den Hydrierungsreaktor weist eine größere Flexibilität im Vergleich zu den beiden zuvor erörterten Ausgestaltungen auf und ermöglicht den sicheren Betrieb des Hydrierungsreaktors in einem weiten Bereich an Olefingehalten im Kohlenwasserstoffeinsatz.

### Bevorzugte Ausgestaltungen der Erfindung

In einer bevorzugten Ausgestaltung des erfindungsgemäßen Verfahrens ist die Aufheizvorrichtung in Verfahrensschritt (c) als Wärmetauscher ausgestaltet, in dem der Hydrierungseinsatzstrom durch indirekten Wärmetausch mit einem heißen Rohsynthesegas-Produktstrom aus der Dampfreformierungsanlage, mit einem heißen Rauchgasstrom aus dem Reformerofen, mit einem heißen Produktgasstrom aus der der Dampfreformierungsanlage nachgeschalteten CO-Konvertierungsanlage (CO-Shift) oder mit mehreren dieser Heißgasströme aufgeheizt wird, wobei die Eintrittstemperatur des Hydrierungseinsatzstroms in den Hydrierungsreaktor über die Größe des Heißgasstroms geregelt wird, das durch eine um den Wärmetauscher herumgeführte Bypassleitung geführt wird. Durch diese Maßnahme wird der Wärmeinhatt der genannten Prozessströme zum Aufheizen des ersten Einsatzstroms genutzt und somit die Energieeffizienz des Gesamtverfahrens verbessert.

Es hat sich gezeigt, dass die Eintrittstemperatur des Hydrierungseinsatzstroms in den Hydrierungsreaktor besonders dann in günstiger Weise über die Größe des um den Wärmetauscher herumgeführten Heißgasstroms geregelt werden kann, wenn der Gesamtolefingehalt des ersten, Olefine umfassenden Einsatzstroms zwischen 2 und 15 mol-% beträgt, Die bei der Hydrierung dieser Olefingehalte freigesetzte Reaktionsenthalpie kann auf diese Weise ausreichend kompensiert werden, so dass eine Überhitzung des Hydrierungsreaktors wirkungsvoll vermieden werden kann. Eingriffe in die Auftrennung und Rückführung des Olefin-Hydrierungsproduktstroms sind dann nicht erforderlich.

Eine weitere bevorzugte Ausgestaltung des erfindungsgemäßen Verfahrens ist dadurch gekennzeichnet, dass die Eintrittstemperatur des Hydrierungseinsatzstroms in den Hydrierungsreaktor mittels der Auftrennvorrichtung über die Größe des dampfförmigen Rückführstroms geregelt wird. Diese Verfahrensausgestaltung kann insbesondere dann vorteilhaft eingesetzt werden, wenn der Gesamtolefingehalt des ersten, Olefine umfassenden Einsatzstroms zwischen 10 und 50 mol-% beträgt. Dabei wird die Eintrittstemperatur in den Hydrierungsreaktor durch feste Einstellung des um den Wärmetauscher herumgeführten Heißgasstroms auf einem konstanten Minimalwert belassen.

Die beiden zuletzt erörterten, bevorzugten Ausgestaltungen des erfindungsgemäßen Verfahrens können sinnvoll kombiniert werden, wenn der Gesamtolefingehalt des ersten, Olefine umfassenden Einsatzstroms zwischen 2 und 50 mol-% beträgt. Dabei wird die Eintrittstemperatur des Hydrierungseinsatzstroms in den Hydrierungsreaktor sowohl mittels der Aufheizvorrichtung über die Größe des Bypasstroms als auch mittels der Auftrennvorrichtung über die Größe des dampfförmigen Rückführstroms geregelt. Diese Art der Regelung der Eintrittstemperatur des Hydrierungseinsatzstroms in den Hydrierungsreaktor weist eine größere Flexibilität im Vergleich zu den beiden zuvor erörterten Ausgestaltungen auf und ermöglicht den sicheren Betrieb des Hydrierungsreaktors in einem weiten Bereich an Olefingehalten im Kohlenwasserstoffeinsatz.

In einem weiteren Aspekt des erfindungsgemäßen Verfahrens wird der dampfförmige Teilrückführstrom mit dem zweiten Einsatzstrom zusammengeführt und mit diesem gemeinsam verdichtet wird oder alternativ der dampfförmige Teilrückführstrom mit dem bereits verdichteten, zweiten Einsatzstrom zusammengeführt. Hierdurch kann eine Rückführung des dampfförmigen Teilrückführstroms erreicht werden, ohne dass es hierfür eines separaten Verdichters bedarf. Oftmals kann der bereits vorhandene Wasserstoffverdichter zu diesem Zweck mitbenutzt werden.

In Weiterbildung der Erfindung erfolgt im Hydrierungsreaktor auch ein mindestens teilweises Umsetzen von im ersten Einsatzstrom enthaltenen, organischen Schwefelverbindungen unter Bedingungen der Hydrodesulfurierung (HDS) zu entschwefelten Kohlenwasserstoffen und Schwefelwasserstoff, wobei der gebildete Schwefelwasserstoff aus dem Reformierungsfeedstrom abgetrennt wird, bevor er der Darinpfreformierungsanlage zugeführt wird. Die Bedingungen der Hydrierung ungesättigter Verbindungen und der Hydrodesuifurierung sind einander so ähnlich, dass die beiden Prozessschritte in demselben Reaktor durchgeführt werden können, falls eine Entschwefelung des organischen Einsatzstoffes erforderlich ist.

In weiterer Ausgestaltung des erfindungsgemäßen Verfahrens erfolgt das Abkühlen in Verfahrensschritt (f) mehrstufig, wobei mindestens eine Kühlstufe als Wärmetauscher ausgestaltet ist, in dem das Abkühlen des dampfförmigen Rückführstroms im indirekten Wärmetausch gegen den dem Verfahren zugeführten ersten Einsatzstrom oder den Hydrierungseinsatzstrom erfolgt. Neben der Abkühlung des dampfförmigen Rückführstroms kann somit eine Vorwärmung des ersten Einsatzstroms oder des Hydrierungseinsatzstroms erreicht werden. Hierdurch verbessert sich der Wärmehaushalt des Verfahrens.

Besonders bevorzugt wird es bei der zuvor erörterten Ausgestaltung des erfindungsgemäßen Verfahrens, wenn mindestens eine weitere Kühlstufe vorhanden ist, in der das Abkühlen des dampfförmigen Rückführstroms im indirekten Wärmetausch gegen ein Kühlmedium, insbesondere Kühlwasser, erfolgt. Auf diese Weise wird eine größere Flexibilität hinsichtlich der zu erzielenden Kühlwirkung erreicht.

Besonders vorteilhaft ist es, wenn in Verfahrensschritt (f) der dampfförmige Rückführstrom so stark abgekühlt wird, dass er zu mindestens zur Hälfte kondensiert wird, so dass mindestens 50 mol-% des Rückführstroms, bevorzugt mindestens 70 mol-% des Rückführstroms flüssig vorliegen. Auf diese Weise wird ein dampfförmiger Teilrückführstrom erhalten, der so klein ist, dass er dem Verdichter für den zweiten Einsatzstrom aufgegeben werden kann, ohne dass dieser vergrößert werden muss.

In besonderer Ausgestaltung des erfindungsgemäßen Verfahrens umfasst die Dampfreformierungsanlage eine Vorreformierungsstufe (Prereformer), in der höhere Kohlenwasserstoffe unter Vorreformierungsbedingungen mindestens teilweise zu Methan umgesetzt werden. Diese Ausgestaltung ist vorteilhaft, da die im Feedstrom enthaltenen Olefine zu den entsprechenden Alkanen hydriert werden, die dann in der Vorreformierungsstufe gezielt zu Methan vorumgesetzt werden können, bevor der gemischte Feedstrom in die Hauptreformierungsstufe gelangt.

### Ausführungs- und Zahlenbeispiele

Weitere Merkmale, Vorteile und Anwendungsmöglichkeiten der Erfindung ergeben sich auch aus der nachfolgenden Beschreibung von Ausführungs- und Zahlenbeispielen und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: ein Verfahren zum Herstellen eines Feedstroms für eine Dampfreformierungsanlage gemäß des Stands der Technik,
- Fig. 2: die schematische Darstellung des erfindungsgemäßen Verfahrens nach einer bevorzugten Ausgestaltung.

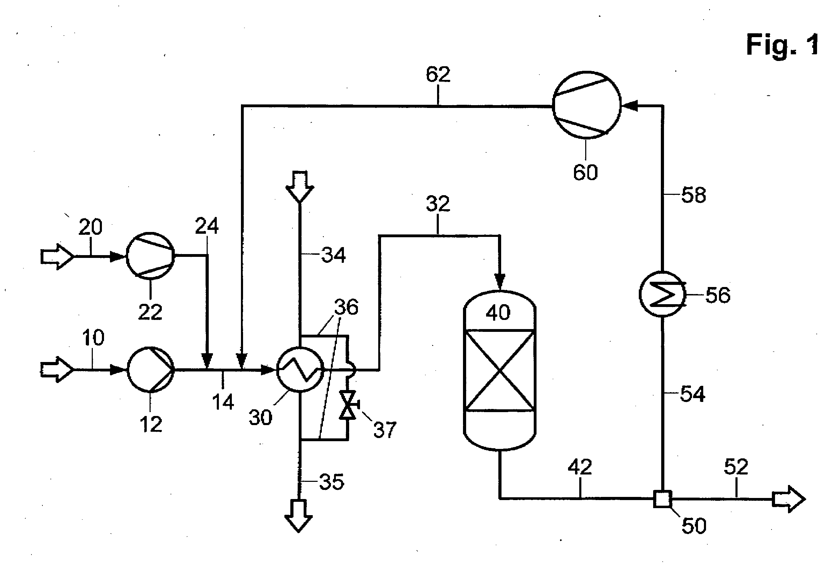

In Fig. 1 wird ein Verfahren gemäß des Stands der Technik zum Herstellen eines Feedstroms für eine Dampfreformierungsanlage aus einem olefinhaltigen Kohlenwasserstoff-Einsatzstrom schematisch als Blockfließbild dargestellt.

Über Leitung 10 und Pumpe 12 wird der erste Einsatzstrom, ein olefinhaltiges, flüssiges Kohlenwasserstoffgemisch, bereitgestellt und über Leitung 14 zum Wärmetauscher 30 geleitet. Über Leitung 20 und Verdichter 22 wird ein zweiter Einsatzstrom, ein wasserstoffhaltiger Gasstrom, bereitgestellt und über Leitungen 24 und 14 ebenfalls zum Wärmetauscher 30 geführt. Durch das Zusammenführen des ersten und des zweiten Einsatzstroms ergibt sich somit ein Hydrierungseinsatzstrom, der im Wärmetauscher 30 aufgeheizt und verdampft wird und über Leitung 32 dem Hydrierungsreaktor 40 zugeführt wird. Alternativ kann der zweite, wasserstoffhaltige Einsatzstrom auch nach der Verdampfung des ersten Einsatzstroms zugegeben werden, um den Hydrierungseinsatzstrom zu bilden; es ist dann ggf. eine zusätzlich Heizvorrichtung zum Einstellen der gewünschten Eintrittstemperatur in den Hydrierungsreaktor vorzusehen.

Gemäß der Darstellung in Fig. 1 wird der resultierende Hydrierungseinsatzstrom im Wärmetauscher 30 im indirekten Wärmetausch gegen den heißen Produktgasstrom aus der der Dampfreformierungsanlage nachgeschafteten CO-Konvertierungsanlage (CO-Shift) aufgeheizt, der über Leitung 34 zum Wärmetauscher 30 geführt wird.

Um den Temperaturanstieg beim Aufheizen des Hydrierungseinsatzstroms im Wärmetauscher 30 zu begrenzen, ist dieser mit einem Bypass, Leitung 36 und ein im Leitungsweg 36 angeordnetes Regelventil 37, ausgestattet. Der abgekühlte Produktgasstrom aus der CO-Konvertierungsanlage wird über Leitung 35 aus dem Verfahren ausgeleitet.

Im Hydrierungsreaktor 40 werden die im Hydrierungseinsatzstrom enthaltenen Olefine sowie ggf. noch enthaltene Anteile an Diolefinen zu einem Paraffine enthaltenden Olefin-Hydrierungsproduktstrom hydriert. Ferner können auch organische Schwefelkomponenten zu den entsprechenden Kohlenwasserstoffen und Schwefelwasserstoff hydriert werden. Im letzteren Fall muss der erzeugte Schwefelwasserstoff durch geeignete Maßnahmen, beispielsweise durch den Einsatz von Adsorptionsmittel auf Basis von Zinkoxid, entfernt werden, bevor der Olefin-Hydrierungsproduktstrom der Dampfreformierungsanlage zugeführt wird. Die für die kombinierte Hydrierung der Mono- und Diolefine sowie die organischen Schwefelkomponenten benötigten Katalysatoren, beispielsweise auf Co-Mo- oder Ni-Mo-Basis, hält der Handel bereit. Alternativ kann die Hydrierung der Diolefine sowie der organischen Schwefelkomponenten in separaten Hydrierungsreaktoren durchgeführt werden, um die Hydrierungsbedingungen jeweils optimal für den jeweiligen Einsatzstoff zu gestalten. Besonders häufig wird es bevorzugt, die Diolefine in einem separaten Hydrierungsreaktor bei tieferen Hydrierungstemperaturen zu hydrieren, um eine Polymerisation und Ablagerung des gebildeten Polymerisats im Olefin-Hydrierungsreaktor zu verhindern. Die zu wählenden Hydrierungsbedingungen für alle diese Hydrierungsvarianten sind dem Fachmann bekannt. Die beschriebenen Modifikationen mit separatem Hydrierungsreaktor für die Diolefine bzw. organischen Schwefelkomponenten wurden bildlich nicht dargestellt; sie sind dem Fachmann aber an sich bekannt.

Über Leitung 42 wird der erhaltene Olefin-Hydrierungsproduktstrom aus dem Hydrierungsreaktor 40 ausgeleitet und der Auftrennvorrichtung 50 zugeführt. Diese kann in einfacher Weise durch Regelventile realisiert werden, die im Leitungsweg der Leitungen 52 und 54 angeordnet werden. Aus der Auftrennvorrichtung wird über Leitung 52 ein dampfförmiger Reformierungsfeedstrom ausgeleitet und der Dampfreformierungsanlage zugeführt. Ferner wird über Leitung 54 ein dampfförmiger Rückführstrom aus der Auftrennvorrichtung ausgeleitet und einer Kühlvorrichtung 56 zugeführt. Die Kühlvorrichtung 56 kann beispielsweise als Wärmetauscher ausgestaltet werden, im dem die Kühlung des dampfförmigen Rückführstroms gegen ein geeignetes Kühlmedium, beispielsweise Kühlwasser, erfolgt. Aufgabe der Kühlvorrichtung ist es, die durch die exotherm verlaufende Hydrierung freigesetzte Wärmemenge aus dem dampfförmigen Rückführstrom abzuführen und diesen soweit abzukühlen, dass er wiederum dem Hydrierungseinsatzstrom zugeführt werden kann und somit eine Überhitzung des Hydrierungsreaktors 40 vermieden wird. Der Rückführstrom verbleibt dabei aber im dampfförmigen Zustand.

Über Leitung 58 wird der nunmehr abgekühlte, dampfförmige Rückführstrom dem Kreislaufverdichter 60 zugeführt und in diesem verdichtet. Über Leitung 62 und Leitung 14 gelangt der verdichtete, dampfförmige Rückführstrom wiederum zum Wärmetauscher 30 zurück, nachdem er mit dem ersten und dem zweiten Einsatzstrom zusammengeführt und somit Bestandteil des Hydrierungseinsatzstroms wird.

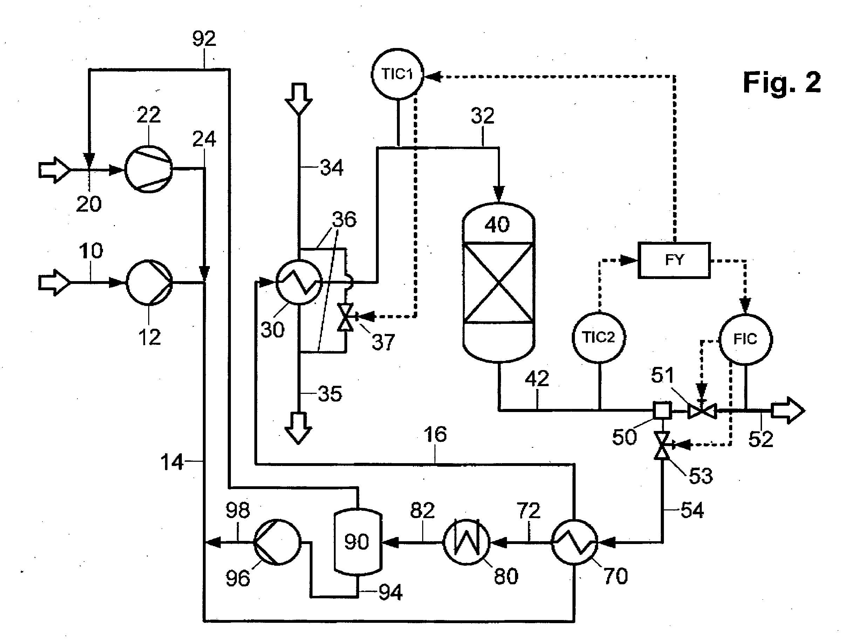

In der in Fig. 2 gezeigten, schematischen Darstellung des erfindungsgemäßen Verfahrens bzw. der erfindungsgemäßen Vorrichtung nach einer bevorzugten Ausgestaltung entspricht der Gang des Verfahrens bis zum Bezugszeichen 54 dem im Zusammenhang mit der Fig. 1 erörterten Verfahrensablauf, wobei Bezugszeichen gleicher Nummerierung auch dieselbe Bedeutung haben wie in Fig. 1.

In Ergänzung zum in Fig. 1 erörterten Verfahrensablauf wird der durch Zusammenführen des ersten und des zweiten Einsatzstroms gebildete Hydrierungseinsatzstrom über Leitung 14 zum Wärmetauscher 70 geführt und dort im indirekten Wärmetausch mit dem dampfförmigen Rückführstrom vorerhitzt, der über Leitung 54 aus der Auftrennvorrichtung 50 ausgeleitet und zum Wärmetauscher 70 geführt wird. Über Leitung 16 wird sodann der vorerhitzte Hydrierungseinsatzstrom zum Wärmetauscher 30 geleitet und dort aufgeheizt und verdampft.

Der aus dem Wärmetauscher 70 ausgeleitete, abgekühlte, dampfförmige Rückführstrom wird über Leitung 72 zu der Kühlvorrichtung 80 geleitet. Die Kühlvorrichtung 80 kann beispielsweise als Wärmetauscher ausgestaltet werden, im dem die Kühlung des dampfförmigen Rückführstroms gegen ein geeignetes Kühlmedium, beispielsweise Kühlwasser, erfolgt. Aufgabe des Wärmetauschers 70 und der Kühlvorrichtung 80 ist es, die durch die exotherm verlaufende Hydrierung freigesetzte Wärmemenge aus dem dampfförmigen Rückführstrom abzuführen und diesen soweit abzukühlen, dass zumindest teilweise Kondensation erfolgt. Der teilkondensierte Stoffstrom wird über Leitung 82 aus der Kühlvorrichtung 80 ausgeleitet, der Phasentrennvorrichtung 90 aufgegeben und in letzterer in einen dampfförmigen Teilrückführstrom und einen flüssigen Teilrückführstrom aufgetrennt. Der dampfförmige Teilrückführstrom, der auch einen Teil des in der Hydrierung nicht umgesetzten Wasserstoffs enthält, wird über Leitung 92 aus der Phasentrennvorrichtung ausgeleitet und mit dem in Leitung 20 herangeführten, zweiten Einsatzstrom vereinigt.

Der über Leitung 94 aus der Phasentrennvorrichtung ausgeleitete, flüssige Teilrückführstrom wird über Pumpe 96 und Leitung 98 mit dem Hydrierungseinsatzstrom vereinigt, der über Leitung 14 herangeführt wird. Alternativ kann der flüssige Teilrückführstrom auch mit dem in Leitung 10 herangeführten, ersten Einsatzstrom vereinigt werden, wodurch die Pumpe 96 eingespart wird.

Vorteilhaft bei dem in Fig. 2 beschriebenen Ausgestaltung der Erfindung ist es, dass gegenüber dem aus dem Stand der Technik bekannten und in Fig. 1 erörterten Verfahrensablauf der Kreislaufverdichter 60 eingespart wird. Dier Einsparungseffekt ist signifikant, weil es sich aufgrund der großen zurückzuführenden Gas- bzw. Dampfmengen und aufgrund des Temperaturniveaus der zu verdichtenden Gase oder Dämpfe um einen Apparat in aufwendiger, ggf. mehrstufiger Ausgestaltung und großer Baugröße handelt.

Zur Regelung der Temperatur im Hydrierungsreaktor sind in der in Fig. 2 dargestellten Ausgestaltung des erfindungsgemäßen Verfahrens unterschiedliche Arten der Regelung dargestellt, die - in Abhängigkeit vom Gesamtolefingehalt im Kohlenwasserstoffeinsatz - alternativ oder zusammen betrieben werden. Signalleitungen der Regelungsvorrichtung werden in Fig. 2 gestrichelt dargestellt. Als Führungsgröße dient in allen Fällen die Temperatur des Olefin-Hydrierungsproduktstroms am Ausgang des Hydrierungsreaktors, die über die Temperaturmess- und regelvorrichtung TIC2 gemessen wird.

Im Falle niedriger bis mittlerer Gesamtolefingehalte, beispielsweise zwischen 2 und 15 mol-%, wird die Temperatur im Hydrierungsreaktor über die Eintrittstemperatur des Hydrierungseinsatzstroms in den Reaktor geregelt. Dies erfolgt durch entsprechendes Einstellen des Regelventils 37 im Leitungsweg der Bypassleitung 36 um den Wärmetauscher 30. Die Regelung ist als Kaskadenregelung ausgeführt, wobei der innere Regelkreis, bestehend aus dem Regelventil 37 und der Temperaturmess- und regelvorrichtung TIC1, durch die Führungsgröße über die Steuereinheit FY beeinflusst wird. Vorteilheft ist es dabei, dass mit diesem Regelkonzept etwaige Einflüsse von Reibung (Hysterese) und Vordruck (Nichtlinearität) im Ventil weitgehend ausgeglichen werden können.

Im Falle mittlerer bis hoher Gesamtolefingehalte, beispielsweise zwischen 10 und 50 mol-%, wird die Temperatur im Hydrierungsreaktor über die Größe des Rückführstroms in Leitung 54 geregelt. Dabei wird die Eintrittstemperatur in den Hydrierungsreaktor durch feste Einstellung des Regelventils 37 auf einem konstanten Minimalwert belassen. Auch diese Regelung ist als Kaskadenregelung ausgeführt, wobei der innere Regelkreis, bestehend aus den Regelventilen 51 und 53 und der Durchflussmess- und regelvorrichtung FIC, durch die Führungsgröße über die Steuereinheit FY beeinflusst wird.

Im Falle niedriger bis hoher Gesamtolefingehalte, beispielsweise zwischen 2 und 50 mot-%, wird eine hohe Flexibilität der Regelung benötigt. Deshalb wird die Temperatur im Hydrierungsreaktor sowohl über die Eintrittstemperatur des Hydrierungseinsatzstroms in den Reaktor (Regelventil 37) als auch über die Größe des Rückführstroms in Leitung 54 (Regelventile 51 und 53) geregelt. Die Regelung ist als Split-Range-Regelung ausgeführt und kann als Kombination der beiden zuvor erörterten Regelkonzepte betrachtet werden. Dabei wir zunächst primär im Regelbereich von 0 bis 50 % die Eintrittstemperatur des Hydrierungseinsatzstroms in den Reaktor beeinflusst und erst nachrangig im Regelbereich von 50 bis 100 % auch die Größe des Rückführstroms in Leitung 54 variiert, so dass die im Leitungsweg zwischen den Leitungen 54 und 92 bzw. 98 befindlichen Rohrleitungen und Apparate möglichst klein dimensioniert werden können, was zur Verringerung der Investitionskosten für eine entsprechende Anlage führt.

### Zahlenbeispiele

In den nachfolgenden Zahlenbeispielen wird die Wirkungsweise der Erfindung anhand der Ergebnisse von Simulationsrechnungen verdeutlicht. Betrachtet wird dabei der Fall der Erzeugung eines Feeds für eine Dampfreformierungsanlage mit einer Wasserstoffkapazität von einer 130000 m_{N}³/h, wobei als Kohlenwasserstoffeinsatz ein Flüssiggasgemisch (LPG) mit einem Olefingehalt von 50 mol-% dient.

Vergleichsbeispiel. Beim Herstellen eines Feedstroms für eine Dampfreformierungsanlage gemäß Stand der Technik (Fig. 1) benötigt der verwendete Kreislaufverdichter 60 eine elektrische Leistung von 165 kW. Die externe Kühlleistung, die in der Kühlvorrichtung 56 aufgebracht werden muss, um die Eintrittstemperatur des dampfförmigen Rückführstroms auf ein geeignetes Temperaturniveau zu bringen, beträgt 4,2 GJ/h. Der Kühlwasserverbrauch für das Kühlen des Kreislaufverdichters 60 beträgt 60 m³/h.

Erfindung. Beim Herstellen eines Feedstroms für eine Dampfreformierungsanlage gemäß Erfindung (Fig. 2) entfällt der Kreislaufverdichter 60, wodurch Investitionskosten eingespart werden. Im Gegenzug wird eine Pumpe 96 benötigt, die aufgrund ihrer kleinen Baugröße und einfacheren Konstruktion aber wesentlich kostengünstiger ist und ggf. sogar entfallen kann, vgl. die Ausführungen zu Fig. 2. Für den dampfförmigen Teilrückführstrom wird der bestehende Verdichter 22 mit benutzt, so dass hier keine separaten Investitionskosten anfallen. Die bei dieser Verfahrensführung benötigte elektrische Leistung beträgt 20 kW, so dass im Vergleich zum Vergleichsbeispiel 145 kW an elektrischer Leistung eingespart wird. Im Gegenzug beträgt die externe Kühlleistung, die in der Kühlvorrichtung 80 aufgebracht werden muss, um die Temperatur des dampfförmigen Rückführstroms auf ein geeignetes Temperaturniveau für die Teilkondensation zu bringen, rund 9,50 GJ/h, so dass gemäß der Erfindung rund 5,32 GJ/h mehr an externer Kühlleistung benötigt werden als bei Verfahrensführung nach dem Stand der Technik. Gerade in Anlagenverbünden stehen aber oft Kühlmedien wie z. B. Kühlwasser kostengünstig zur Verfügung, so dass die Einsparung hinsichtlich der benötigten elektrischen Leistung in Verbindung mit dem Entfall des Kreislaufverdichters dominiert.

### Gewerbliche Anwendbarkeit

Mit der Erfindung werden ein Verfahren und eine Vorrichtung zum Herstellen eines olefinhaltigen Feedstroms für eine Dampfreformierungsanlage bereitgestellt. Durch die erfindungsgemäße Abkühlung des dampfförmigen Rückführstroms bis zu seiner wenigstens teilweisen Kondensation und die getrennte Rückführung des dampfförmigen Teilrückführstroms und des flüssigen Teilrückführstroms wird die Anschaffung eines großen und aufwendig gestalteten Kreislaufverdichters vermieden und es wird elektrische Energie zum Betreiben desselben eingespart. Die erfindungsgemäße Regelung der Eintrittstemperatur des Hydrierungseinsatzstroms in den Hydrierungsreaktor weist eine große Flexibilität auf und ermöglicht den sicheren Betrieb des Hydrierungsreaktors in einem weiten Bereich an Olefingehalten im Kohlenwasserstoffeinsatz.

### Bezugszeichenliste

- 10: Leitung
- 12: Pumpe
- 14: Leitung
- 20: Leitung
- 22: Verdichter
- 24: Leitung
- 30: Wärmetauscher
- 32: Leitung
- 34: Leitung
- 35: Leitung
- 36: Leitung
- 37: Regelventil
- 40: Hydrierreaktor
- 42: Leitung
- 50: Auftrennvorrichtung
- 51: Regelventil
- 52: Leitung
- 53: Regelventil
- 54: Leitung
- 56: Kühlvorrichtung
- 58: Leitung
- 60: Kreislaufverdichter
- 62: Leitung
- 70: Wärmetauscher
- 72: Wärmetauscher
- 80: Kühlvorrichtung
- 82: Leitung
- 90: Phasentrennvorrichtung
- 92: Leitung
- 94: Leitung
- 96: Pumpe
- 98: Leitung

- TIC: Temperaturmess- und regelvorrichtung
- FIC: Durchflussmess- und regelvorrichtung
- FY: Steuereinheit

## Patentansprüche

1. Verfahren zum Herstellen eines Feedstroms für eine mindestens eine Reformierungsstufe enthaltende Dampfreformierungsanlage, umfassend folgende Schritte:
(a) Bereitstellen eines ersten flüssigen Einsatzstroms, der Olefine enthält, und eines zweiten, Wasserstoff umfassenden Einsatzstroms,
(b) Zusammenführen des ersten und des zweiten Einsatzstroms zu einem Hydrierungseinsatzstrom,
(c) Aufheizen des Hydrierungseinsatzstroms in einer Aufheizvorrichtung und Verdampfen des Hydrierungseinsatzstroms in einer Verdampfungsvorrichtung,
(d) Zuführen des aufgeheizten und verdampften Hydrierungseinsatzstroms zu einem mindestens eine Hydrierungszone umfassenden Hydrierungsreaktor, mindestens teilweises Umsetzen der im Hydrierungseinsatzstrom enthaltenen Olefine in dem Hydrierungsreaktor unter Olefin-Hydrierungsbedingungen, Ausleiten eines dampfförmigen Olefin-Hydrierungsproduktstroms aus dem Hydrierungsreaktor,
(e) Auftrennen des Olefin-Hydrierungsproduktstroms in einer Auftrennvorrichtung in einen dampfförmigen Reformierungsfeedstrom, der einer Dampfreformierungsanlage zugeführt wird, und in einen dampfförmigen Rückführstrom,
(f) Abkühlen des dampfförmigen Rückführstroms, wobei dieser mindestens teilweise kondensiert und nachfolgend einer Phasentrennvorrichtung zugeführt wird, in der er in einen dampfförmigen Teilrückführstrom und einen flüssigen Teilrückführstrom aufgetrennt wird,
(g) Ausleiten des dampfförmigen Teilrückführstroms und des flüssigen Teilrückführstroms aus der Phasentrennvorrichtung, wobei der dampfförmige Teilrückführstrom mit dem zweiten Einsatzstrom zusammengeführt wird und der flüssige Teilrückführstrom mit dem ersten Einsatzstrom zusammengeführt wird und/oder zum Verfahrensschritt (b) zurückgeführt wird,
wobei die Eintrittstemperatur des Hydrierungseinsatzstroms in den Hydrierungsreaktor mittels der Aufheizvorrichtung (Verfahrensschritt (c)) und/oder mittels der Auftrennvorrichtung (Verfahrensschritt (e)) geregelt wird.

2. Verfahren nach Anspruch 1, **dadurch gekennzeichnet, dass** die Aufheizvorrichtung in Verfahrensschritt (c) als Wärmetauscher ausgestaltet ist, in dem der Hydrierungseinsatzstrom durch indirekten Wärmetausch mit einem heißen Rohsynthesegas-Produktstrom aus der Dampfreformierungsanlage, mit einem heißen Rauchgasstrom aus dem Reformerofen, mit einem heißen Produktgasstrom aus der der Dampfreformierungsanlage nachgeschalteten CO-Konvertierungsanlage (CO-Shift) oder mit mehreren dieser Heißgasströme aufgeheizt wird, wobei die Eintrittstemperatur des Hydrierungseinsatzstroms in den Hydrierungsreaktor über die Größe des Heißgasstroms geregelt wird, das durch eine um den Wärmetauscher herumgeführte Bypassleitung geführt wird.

3. Verfahren nach Anspruch 1, **dadurch gekennzeichnet, dass** die Eintrittstemperatur des Hydrierungseinsatzstroms in den Hydrierungsreaktor mittels der Auftrennvorrichtung über die Größe des dampfförmigen Rückführstroms geregelt wird.

4. Verfahren nach Anspruch 2, **dadurch gekennzeichnet, dass** der Gesamtolefingehalt des ersten, Olefine umfassenden Einsatzstroms zwischen 2 und 15 mol-% beträgt.

5. Verfahren nach Anspruch 3, **dadurch gekennzeichnet, dass** der Gesamtolefingehalt des ersten, Olefine umfassenden Einsatzstroms zwischen 10 und 50 mol-% beträgt.

6. Verfahren nach Anspruch 2 und 3, **dadurch gekennzeichnet, dass** die Eintrittstemperatur des Hydrierungseinsatzstroms in den Hydrierungsreaktor sowohl mittels der Aufheizvorrichtung über die Größe des Bypasstroms als auch mittels der Auftrennvorrichtung über die Größe des dampfförmigen Rückführstroms geregelt wird, und dass der Gesamtolefingehalt des ersten, Olefine umfassenden Einsatzstroms zwischen 2 und 50 mol-% beträgt.

7. Verfahren nach einem der vorigen Ansprüche, **dadurch gekennzeichnet, dass** der dampfförmige Teilrückführstrom mit dem zweiten Einsatzstrom zusammengeführt und mit diesem gemeinsam verdichtet wird oder dass der dampfförmige Teilrückführstrom mit dem bereits verdichteten, zweiten Einsatzstrom zusammengeführt wird.

8. Verfahren nach einem der vorigen Ansprüche, **dadurch gekennzeichnet, dass** im Hydrierungsreaktor auch ein mindestens teilweises Umsetzen von im ersten Einsatzstrom enthaltenen, organischen Schwefelverbindungen unter Bedingungen der Hydrodesulfurierung (HDS) zu entschwefelten Kohlenwasserstoffen und Schwefelwasserstoff erfolgt, wobei der gebildete Schwefelwasserstoff aus dem Reformierungsfeedstrom abgetrennt wird, bevor er der Dampfreformierungsanlage zugeführt wird.

9. Verfahren nach einem der vorigen Ansprüche, **dadurch gekennzeichnet, dass** das Abkühlen in Verfahrensschritt (f) mehrstufig erfolgt, wobei mindestens eine Kühlstufe als Wärmetauscher ausgestaltet ist, in dem das Abkühlen des dampfförmigen Rück-, führstroms im indirekten Wärmetausch gegen den dem Verfahren zugeführten ersten Einsatzstrom oder den Hydrierungseinsatzstrom erfolgt.

10. Verfahren nach Anspruch 9, **dadurch gekennzeichnet, dass** mindestens eine weitere Kühlstufe vorhanden ist, in der das Abkühlen des dampfförmigen Rückführstroms im indirekten Wärmetausch gegen ein Kühlmedium, insbesondere Kühlwasser, erfolgt.

11. Verfahren nach einem der vorigen Ansprüche, **dadurch gekennzeichnet, dass** der dampfförmige Rückführstrom so stark abgekühlt wird, dass er zu mindestens zur Hälfte kondensiert wird, so dass mindestens 50 mol-%, bevorzugt mindestens 70 mol-% des Rückführstroms des Rückführstroms flüssig vorliegen.

12. Verfahren nach einem der vorigen Ansprüche, **dadurch gekennzeichnet, dass** die Dampfreformierungsanlage eine Vorreformierungsstufe (Prereformer) umfasst, in der höhere Kohlenwasserstoffe unter Vorreformierungsbedingungen mindestens teilweise zu Methan umgesetzt werden.

## Claims

1. Process for producing a feed stream for a steam reforming plant containing at least one reforming stage, comprising the following steps:
(a) provision of a first liquid input stream containing olefins and a second input stream comprising hydrogen,
(b) combining of the first input stream and the second input stream to form a hydrogenation input stream,
(c) heating of the hydrogenation input stream in a heating apparatus and vaporization of the hydrogenation input stream in a vaporization apparatus,
(d) introduction of the heated and vaporized hydrogenation input stream into a hydrogenation reactor comprising at least one hydrogenation zone, at least partial conversion of the olefins present in the hydrogenation input stream in the hydrogenation reactor under olefin hydrogenation conditions, discharge of a gaseous olefin hydrogenation product stream from the hydrogenation reactor,
(e) separation of the olefin hydrogenation product stream in a separation apparatus into a gaseous reforming feed stream which is fed into a steam reforming plant and a gaseous recycle stream,
(f) cooling of the gaseous recycle stream, with this being at least partially condensed and subsequently introduced into a phase separation apparatus in which it is separated into a gaseous partial recycle stream and a liquid partial recycle stream,
(g) discharge of the gaseous partial recycle stream and the liquid partial recycle stream from the phase separation apparatus, with the gaseous partial recycle stream being combined with the second input stream and the liquid partial recycle stream being combined with the first input stream and/or being recirculated to process step (b),
where the entry temperature of the hydrogenation input stream into the hydrogenation reactor is regulated by means of the heating apparatus (process step (c)) and/or by means of the separation apparatus (process step (e)).

2. Process according to Claim 1, **characterized in that** the heating apparatus in process step (c) is configured as a heat exchanger in which the hydrogenation input stream is heated by indirect heat exchange with a hot crude synthesis gas product stream from the steam reforming plant, with a hot flue gas stream from the reformer furnace, with a hot product gas stream from the CO conversion plant located downstream of the steam reforming plant (CO shift) or with a plurality of these hot gas streams, where the entry temperature of the hydrogenation input stream into the hydrogenation reactor is regulated via the size of the hot gas stream which is conveyed through a bypass conduit around the heat exchanger.

3. Process according to Claim 1, **characterized in that** the entry temperature of the hydrogenation input stream into the hydrogenation reactor is regulated by means of the separation apparatus via the size of the gaseous recycle stream.

4. Process according to Claim 2, **characterized in that** the total olefin content of the first input stream comprising olefins is in the range from 2 to 15 mol-%,

5. Process according to Claim 3, **characterized in that** the total olefin content of the first input stream comprising olefins is in the range from 10 to 50 mol%.

6. Process according to Claims 2 and 3, **characterized in that** the entry temperature of the hydrogenation input stream into the hydrogenation reactor is regulated both by means of the heating apparatus via the size of the bypass stream and also by means of the separation apparatus via the size of the gaseous recycle stream and **in that** the total olefin content of the first input stream comprising olefins is in the range from 2 to 50 mol%.

7. Process according to any of the preceding claims, **characterized in that** the gaseous partial recycle stream is combined with the second input stream and compressed together with the latter or **in that** the gaseous partial recycle stream is combined with the previously compressed, second input stream.

8. Process according to any of the preceding claims, **characterized in that** an at least partial conversion of organic sulfur compounds present in the first input stream also occurs in the hydrogenation reactor under conditions of hydrodesulfurization (HDS) to give desulfurized hydrocarbons and hydrogen sulfide, with the hydrogen sulfide formed being separated off from the reforming feed stream before the latter is fed to the steam reforming plant.

9. Process according to any of the preceding claims, **characterized in that** the cooling in process step (f) is effected in a number of stages, with at least one cooling stage being configured as a heat exchanger in which cooling of the gaseous recycle stream occurs by indirect heat exchange with the first input stream introduced into the process or the hydrogenation input stream.

10. Process according to Claim 9, **characterized in that** at least one further cooling stage in which cooling of the gaseous recycle stream occurs by indirect heat exchange with a cooling medium, in particular cooling water, is present.

11. Process according to any of the preceding claims, **characterized in that** the gaseous recycle stream is cooled to such an extent that at least half of it is condensed, so that at least 50 mol-%, preferably at least 70 mol% of the recycle stream is present in liquid form.

12. Process according to any of the preceding claims, **characterized in that** the steam reforming plant comprises a prereforming stage (prereformer) in which higher hydrocarbons are at least partly converted into methane under prereforming conditions.

## Revendications

1. Procédé de production d'un courant de charge pour une installation de reformage à la vapeur contenant au moins un étage de reformage, comprenant les étapes suivantes :
(a) obtention d'un premier courant d'entrée liquide contenant des oléfines et d'un deuxième courant d'entrée comprenant de l'hydrogène,
(b) combinaison du premier courant d'entrée et du deuxième courant d'entrée pour former un courant d'entrée d'hydrogénation,
(c) chauffage du courant d'entrée d'hydrogénation dans un appareil de chauffage et vaporisation du courant d'entrée d'hydrogénation dans un appareil de vaporisation,
(d) introduction du courant d'entrée d'hydrogénation chauffé et vaporisé dans un réacteur d'hydrogénation comprenant au moins une zone d'hydrogénation, conversion au moins partielle des oléfines présentes dans le courant d'entrée d'hydrogénation dans le réacteur d'hydrogénation dans des conditions d'hydrogénation d'oléfines, évacuation d'un courant de produit d'hydrogénation d'oléfines gazeux du réacteur d'hydrogénation,
(e) séparation du courant de produit d'hydrogénation d'oléfines dans un appareil de séparation en un courant de charge de reformage gazeux qui est introduit dans une installation de reformage à la vapeur et un courant de recyclage gazeux,
(f) refroidissement du courant de recyclage gazeux, celui-ci étant au moins partiellement condensé puis introduit dans un appareil de séparation de phases dans lequel il est séparé en un courant de recyclage partiel gazeux et un courant de recyclage partiel liquide,
(g) évacuation du courant de recyclage partiel gazeux et du courant de recyclage partiel liquide de l'appareil de séparation de phases, le courant de recyclage partiel gazeux étant combiné avec le deuxième courant d'entrée et le courant de recyclage partiel liquide étant combiné avec le premier courant d'entrée et/ou remis en circulation à l'étape (b) du procédé,
dans lequel la température d'entrée du courant d'entrée d'hydrogénation dans le réacteur d'hydrogénation est régulée au moyen de l'appareil de chauffage (étape (c) du procédé) et/ou au moyen de l'appareil de séparation (étape (e) du procédé).

2. Procédé selon la revendication 1, **caractérisé en ce que** l'appareil de chauffage à l'étape (c) du procédé est configuré comme un échangeur de chaleur dans lequel le courant d'entrée d'hydrogénation est chauffé par échange de chaleur indirect avec un courant de produit gazeux de synthèse brut chaud provenant de l'installation de reformage à la vapeur, avec un courant de gaz de combustion chaud provenant du four du reformeur, avec un courant de produit gazeux chaud provenant de l'installation de conversion de CO située en aval de l'installation de reformage à la vapeur (réaction du gaz à l'eau) ou avec une pluralité de ces courants de gaz chaud, la température d'entrée du courant d'entrée d'hydrogénation dans le réacteur d'hydrogénation étant régulée par le biais de la taille du courant de gaz chaud qui est transporté par une conduite de dérivation autour de l'échangeur de chaleur.

3. Procédé selon la revendication 1, **caractérisé en ce que** la température d'entrée du courant d'entrée d'hydrogénation dans le réacteur d'hydrogénation est régulée au moyen de l'appareil de séparation par le biais de la taille du courant de recyclage gazeux.

4. Procédé selon la revendication 2, **caractérisé en ce que** la teneur totale en oléfines du premier courant d'entrée comprenant des oléfines se situe dans la gamme de 2 à 15 % en moles.

5. Procédé selon la revendication 3, **caractérisé en ce que** la teneur totale en oléfines du premier courant d'entrée comprenant des oléfines se situe dans la gamme de 10 à 50 % en moles.

6. Procédé selon les revendications 2 et 3, **caractérisé en ce que** la température d'entrée du courant d'entrée d'hydrogénation dans le réacteur d'hydrogénation est régulée à la fois au moyen de l'appareil de chauffage par le biais de la taille du courant de dérivation et au moyen de l'appareil de séparation par le biais de la taille du courant de recyclage gazeux, et **en ce que** la teneur totale en oléfines du premier courant d'entrée comprenant des oléfines se situe dans la gamme de 2 à 50 % en moles.

7. Procédé selon l'une quelconque des revendications précédentes, **caractérisé en ce que** le courant de recyclage partiel gazeux est combiné avec le deuxième courant d'entrée et compressé avec ce dernier ou **en ce que** le courant de recyclage partiel gazeux est combiné avec le deuxième courant d'entrée préalablement compressé.

8. Procédé selon l'une quelconque des revendications précédentes, **caractérisé en ce qu'**une conversion au moins partielle de composés soufrés organiques présents dans le premier courant d'entrée se produit également dans le réacteur d'hydrogénation dans des conditions d'hydrodésulfuration (HDS) pour donner des hydrocarbures désulfurés et du sulfure d'hydrogène, le sulfure d'hydrogène formé étant séparé du courant de charge de reformage avant que ce dernier soit introduit dans l'installation de reformage à la vapeur.

9. Procédé selon l'une quelconque des revendications précédentes, **caractérisé en ce que** le refroidissement à l'étape (f) du procédé est effectué dans un nombre d'étages, au moins un étage de refroidissement étant configuré comme un échangeur de chaleur dans lequel un refroidissement du courant de recyclage gazeux se produit par échange de chaleur indirect avec le premier courant d'entrée introduit dans le procédé ou le courant d'entrée d'hydrogénation.

10. Procédé selon la revendication 9, **caractérisé en ce qu'**au moins un autre étage de refroidissement dans lequel un refroidissement du courant de recyclage gazeux se produit par échange de chaleur indirect avec un milieu de refroidissement, en particulier de l'eau de refroidissement, est présent.

11. Procédé selon l'une quelconque des revendications précédentes, **caractérisé en ce que** le courant de recyclage gazeux est refroidi à un degré tel qu'au moins la moitié de celui-ci est condensé, de telle sorte qu'au moins 50 % en moles, de préférence au moins 70 % en moles du courant de recyclage est présent sous forme liquide.

12. Procédé selon l'une quelconque des revendications précédentes, **caractérisé en ce que** l'installation de reformage à la vapeur comprend un étage préreformage (préreformeur) dans lequel des hydrocarbures supérieurs sont au moins partiellement convertis en méthane dans des conditions de préreformage.
